# EUROPÄISCHE PATENTSCHRIFT

(11) **EP 0 845 215 B1**
(45) Veröffentlichungstag und Bekanntmachung des Hinweises auf die Patenterteilung: **31.05.2000**
(21) Anmeldenummer: 97120376.5
(22) Anmeldetag: 20.11.1997
(51) Int. Cl.: A23B 4/28

(54) **Vorrichtung zum Injizieren einer Flüssigkeit in Nahrungsmittel**
Apparatus for injecting liquid into pieces of food
Appareil pour injecter des liquides dans des aliments

(30) Priorität: 20.11.1996 DE 19648059; 12.05.1997 DE 19719414
(43) Veröffentlichungstag der Anmeldung: 03.06.1998
(73) Patentinhaber: Günther Maschinenbau GmbH, 64807 Dieburg (DE)
(72) Erfinder: Günther, Helmut, 64850 Schaafheim (DE)
(74) Vertreter: Kasseckert, Rainer

(56) Entgegenhaltungen:
- EP-A- 0 479 447
- EP-A- 0 561 105
- DE-A- 2 703 435
- DE-A- 3 034 284
- DE-A- 3 509 158

## Beschreibung

Die Erfindung betrifft eine Vorrichtung zum Injizieren einer Flüssigkeit nach dem Oberbegriff des Anspruchs 1.

Aus der EP 297 592 A1 ist eine Vorrichtung zum Injizieren einer Flüssigkeit in ein Lebensmittel, insbesondere zum Pökeln von Fleisch, Geflügel oder Fisch, bekannt. Diese Vorrichtung weist eine Gruppe von Hohlnadeln auf, die in bestimmte Bereiche des Lebensmittels periodisch eingestochen werden, Flüssigkeit injizieren und wieder herausgezogen werden. Sie weist einen Fördervorschub auf, der die Lebensmittel intermittierend relativ zu der Hohlnadeln bewegt, und eine elektronische Steuerung für die Abgabe der Flüssigkeit und den Vorschub. Bei dieser Vorrichtung regelt die Steuerung die Menge der injizierten Flüssigkeit in Abhängigkeit vom Flüssigkeitsdruck im Lebensmittel. Die Öffnung und Schließung der Einspritzventile erfolgt mechanisch über Abtastelemente, die in Abhängigkeit von der Eindringtiefe in das Lebensmittel die Flüssigkeitszugabe regeln. Die Vorrichtung ist mechanisch relativ aufwendig und hat nur eine begrenzte Arbeitsgeschwindigkeit.

Aus der DE 30 34 284 A 1 ist ein Pökelinjektor bekannt, bei dem der Hub der Einspritznadeln entsprechend der Dicke der Fleischstücke eingestellt wird. Eine Abtastrolle erkennt die Dicke der Fleischstücke und veranlaßt eine Steuerung, den Nadelhub entsprechend zu verändern. Die Veränderung erfolgt über die Verschiebung eines Gleitsteines in einem dem Exzenter zwischengeschalteten Hebel bei gleichmäßig weiterdrehendem Antriebsmotor, wodurch der normale sinusförmige Geschwindigkeitsverlauf der Nadeln erhalten bleibt. Die Vorschubgeschwindigkeit ist also bei dickem und dünnen Fleisch gleich.

Aus der DE 35 09 158 A 1 ist ein Pökelinjektor bekannt, der im Bereich der Einstechnadeln ein ebenfalls auf- und abgehendes Druckstück zum Pressen des dort befindlichen Fleischstückes aufweist. Zur Variation der Arbeitsgeschwindigkeit sind keine Lehren gegeben.

Aus der EP 561 105 A 1 ist ein Pökelinjektor bekannt, bei dem für den Nadelantrieb ein Servomotor verwendet werden kann. Dabei wird bei einer vollen Umdrehung der Getriebeabtriebswelle mit zwei Geschwindigkeiten gefahren: einer höheren außerhalb des Fleisches, einer niedrigeren innerhalb, wodurch die Zeit außerhalb des Fleisches verringert wird, was den Gesamtprozeß beschleunigt. Dieser Gegenstand bildet den Oberbegriff des Anspruchs 1. Dieses Fahrweise hat jedoch den Nachteil, daß die Nadeln und meist auch der damit verbundene Fleischniederhalter recht flott auf das Fleisch auftreffen und es quetschen, wodurch es Saft verlieren oder weniger Lake aufnehmen kann. Zudem belasten die Beschleunigung, die hohe Geschwindigkeit und das Abbremsen des Nadelbalkens die ganze Antriebsmechanik und führen zu einem "Stampfen" der Maschine.

Davon ausgehend ist es Aufgabe der Erfindung, eine solche Vorrichtung dahingehend zu verbessern, daß sie eine höhere Arbeitsgeschwindigkeit erreichen kann.

Diese Aufgabe wird erfindungsgemäß dadurch gelöst, daß ein Programm vorgesehen ist, in dem der Antrieb der Nadeln in seiner Bewegungsrichtung stoppt und umkehrt, so daß die Nadeln nur einen Teil der zur Verfügung stehenden Arbeitshöhe bewegt werden.

Ausführungen der Erfindung sind Gegenstände von Unteransprüchen.

In einer bevorzugten Ausführungsform sind der Motor, der die Gruppe der Hohlnadeln bewegt, und der Motor, der die Fördereinheit bewegt, hochdynamische Servomotoren oder Servomotor-Getriebeeinheiten ,welche über eine Servosteuerung miteinander verknüpft sind und somit miteinander kommunizieren. So kann der Förderbandmotor an die Steuerung rückmelden, daß die gewünschte neue Position des Förderbandes eingenommen ist und der Motor für die Bewegung der Nadeln "starten" kann. Es reicht in einer einfacheren Ausführung aber auch aus, wenn der Förderbandmotor ein (nur Befehle empfangender und nicht rückmeldender) Schrittmotor ist. Stellungen des/der Motoren oder der Abtriebe werden z.B. durch inkrementale Weggeber erfaßt. Hierdurch wird die positionsabhängige Steuerung aller im Gesamtsystem der o. g. Maschine zu regelnden Parameter in Abhängigkeit zueinander möglich.

Hierdurch wird eine Kommunikation dieser beiden Verfahreinheiten untereinander, sowie mit allen anderen Prozeßparametern möglich (z.B. Pumpenkreislauf, Zuführeinheiten etc.). Im Umkehrschluß kann man erfindungsgemäß die Drehwegvorgabe (Drehwegsteuerung) benutzen, um dem System technologische Vorgaben zu geben, die dann durch die mechanische Ausführung, z.B. durch den Schubhebeltrieb, kinematisch realisiert werden. So wird eine schnellere und feiner dosierbare Pökelung oder Produktbehandlung ermöglicht.

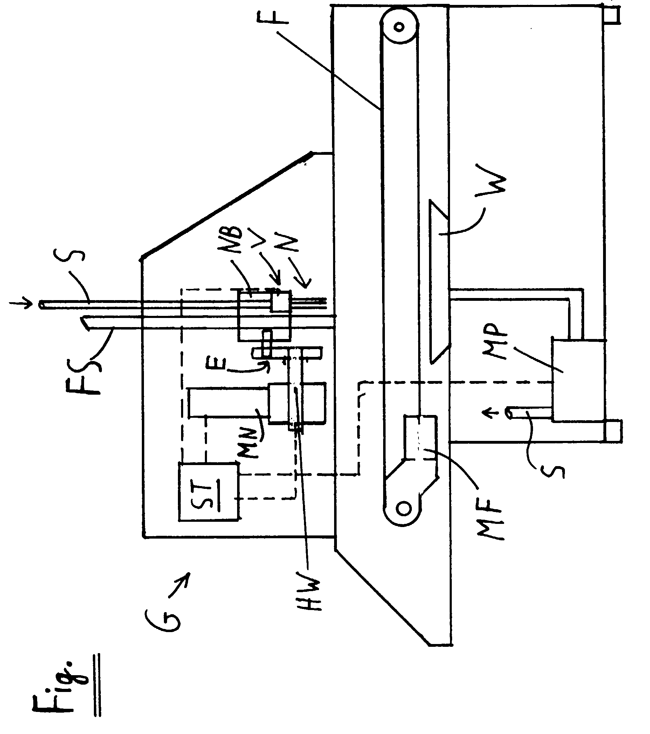

Weitere Merkmale, Ausführungen und Vorteile der Erfindung werden anhand der einzigen Figur näher erläutert, die ein Ausführungsbeispiel eines erfindungsgemäßen Pökelinjektors zeigt.

Der Pökelinjektor enthält das Gehäuse G, durch welches das Förderband F, angetrieben durch den Motor Förderband MF bewegt werden kann. Oberhalb des Förderbandes F befindet sich der Nadelbalken NB mit einer Vielzahl von Nadeln N. Der Nadelbalken NB ist an den Führungsstangen FS geführt und wird von einem Exzenter E, der an der Hauptwelle HW eines Getriebes sitzt, das vom Motor Nadelbalken MN angetrieben wird, auf und ab bewegt. Die Lage des Motors MN (und der Elektronik) oberhalb des zu behandelnden Gutes schützt diese(n) vor der Berührung mit dem zu injizierenden Mittel, welches meistens Salz enthält und daher aggresiv wirkt. Dies erhöht die Lebensdauer erheblich. Statt der Exzenters E kann auch ein an sich bekannter und daher nicht gezeigter Schubkurbeltrieb (eine Pleulstange verbindet einen an der Getriebeausgangswelle exzentrisch befestigten rotierenden Zapfen mit einem am Nadelbalken NB befestigten Zapfen, und wandelt so die Rotation in eine Auf- und Abbewegung um) vorgesehen sein. Beide Ausführungen wirken sehr direkt (den Befehlen mit nur wenig Spiel folgend) auf den Nadelbalken, bestehen aus ausgereifter und bekannter Technik, und haben - im Gegensatz zu manchem bekannten Antrieb, bei dem der unten liegende Motor über viele und lange Gestänge auf den Nadelbalken wirkt - nur wenige Teile.

Die vorteilhafte Anbringung des Motors MF direkt am Förderband erlaubt ein schnelles und direktes Vor- oder Zurückbewegen des zu behandelnden Gutes (des Fleisches) . Der Verzicht auf indirekte Kurbeltriebe oder andere nicht-drehende mechanische Teile, wie sie bei herkömlichen Fördervorrichtungen oft üblich sind, erhöht ebenfalls die Lebensdauer. Die vorteilhaft vorgesehene Verwendung eines Förderbandes statt hin- und hergehender und auf- und abgehender Rippen für den Vorschub vereinfacht die Mechanik des Gerätes und kommt der elektronischen Vorschubsteuerung durch den Drehantrieb MF entgegen. Unterhalb des Förderbandes F ist die Wanne W vorgesehen, die Pökelflüssigkeit zum Motor Pumpe MP leitet (eine Filtrationseinrichtung ist vorgesehen, hier in der Figur aber nicht gezeigt). Vom Motor Pumpe MP führt der Schlauch S zum Nadelbalken NB, der ein oder mehrere Ventile V trägt, die bei Öffnung die Pökelflüssigkeit in die Hohlnadeln N leiten. In der Figur ist vom Schlauch S der untere Teil gezeichnet, der vom Motor MP wegleitet, und der obere Teil, durch den die Flüssigkeit zum Nadelbalken NB fließt.

Die Funktion ist wie folgend: Auf das Förderband F werden die zu injizierenden Produkte (z.B. Fleisch) aufgegeben, die gepökelt oder mit einer anderen Flüssigkeit behandelt werden sollen. Das Förderband F bewegt sich intermittierend von rechts nach links, so daß das Produkt in den Bereich kommt, in dem sich die Nadeln N befinden. Bei Auf- und Abbewegung des Nadelbalkens NB stechen die Nadeln N in das Produkt und geben die Pökelflüssigkeit in das Produkt ab. Wenn die Nadeln N wieder herausgezogen werden, wird das Förderband F durch den Motor Förderband MF ein Stück weiter bewegt und die Nadeln N können an einer beliebig definierbaren Stelle des Produktstückes wieder einstechen. Der Pumpenkreislauf wird in an sich bekannter Weise geregelt. Der Motor Pumpe MP sorgt für einen beliebig voreingestellten Druck, die Ventile V öffnen zu beliebig einstellbaren Zeiten - gesteuert über die Nadelstellung, abgelesen an der Stellung des drehwegauswertbaren Motors MN- und erlauben so das kontrollierte Injizieren der Flüssigkeit in das Produkt.

Deutlich zu erkennen ist hier bereits, daß der Antrieb (MN) für den Nadelbalken NB getrennt vom Antrieb MF für das Förderband ist. Diese Entkoppelung erlaubt ein getrenntes Einstellen der Vorschubgeschwindigkeit unabhängig von der Auf- und Abbewegung der Nadeln N.

Erfindungsgemäß sind nun Mittel vorgesehen, die die Stellung der Hauptwelle HW (oder des Motors Nadelbalken MN und damit die Stellung der Nadeln N) dedektieren. Diese Information wird der Steuerung ST zugeleitet, die also über die Stellung der Nadeln informiert ist. Diese Steuerung ST hat hier beispielsweise vier Ausgänge, nämlich die Steuerung des Motors MN, der die Nadeln auf und ab bewegt, die Steuerung des Motors für das Förderband MF und die Steuerung der Pumpe (Motor MP) sowie die Steuerung des/der Ventile V.

Die Steuerung ST kann nun auf verschiedenste Weisen programmiert werden und erlaubt damit ein äußerst breites Anwendungsspektrum der Maschine. So kann z.B. die Geschwindigkeit des Nadelbalkens NB in weitem Rahmen beliebig eingestellt werden, von z.B. 10 Hüben pro Minute bis zu 100 Hüben pro Minute. Daneben läßt sich erfindungsgemäß auch die Geschwindigkeit des Motors MN für den Nadelbalken NB auch innerhalb eines Hubes vorprogrammiert steuern. So kann z.B. - wenn dünnes Fleisch auf dem Förderband F liegt, der Motor MN so angesteuert werden, daß sich die Nadeln N relativ schnell bis zur Oberkante des Fleisches nach unten bewegen, dann sich langsam weiter bewegen, in das Fleisch einstechen, dabei werden die Ventile V zum Injizieren der Pökelflüssigkeit geöffnet, und dann die Nadeln N langsam wieder aus dem Fleisch herausgezogen. Haben sie eine bestimmte Höhe erreicht (was ja aus der Stellung der Hauptwelle HW ablesbar ist), können die Nadeln N beschleunigt werden und fahren sehr schnell wieder in die obere Stellung. Durch dieses Programm wird die sogenannte Totzeit, d.h. die Zeit innerhalb der die Nadeln außerhalb des Fleisches sind, stark reduziert.

Darüber hinaus sind über die erfindungsgemäße Kopplung (hochdynamischen Servoantriebe und deren mögliche Verfahrensprofile) weitere Varianten möglich:

So kann unter anderem der normalerweise sinusförmige Geschwindigkeits-Zeit-Verlauf des Schubkurbeltriebes des Nadelbalkens NB linearisiert werden.

Bei produktabhängigen niedrig benötigten Arbeitshöhen - dünnem Fleisch, wie Fisch - ist es ferner möglich, nicht die ganze Kreisbewegung des Antriebs der Nadeln N oder des Nadelbalkens NB durchzufahren, sondern die Bewegungsrichtung nach Herausfahren der Nadeln aus dem Fleisch zu stoppen und umzukehren (Reversierbetrieb), so daß die Nadeln N nur in Teilbereichen des möglichen Verfahrweges (der zur Verfügung stehenden Arbeitshöhe) bewegt werden. Durch die Motorsteuerung kann der Schubkurbeltrieb ja an jeder Stelle sowohl vorwärts als auch rückwärts verfahren werden. Dieses Reversieren ist noch schneller in der Arbeitsgeschwindigkeit als das oben erwähnte "schnellere" Obenherumfahren in gleicher Drehrichtung. Zudem wird das Fleisch geschont, da die Nadeln nicht mit hoher Geschwindigkeit - und Wucht - auftreffen, sondern langsam, im Wortsinn "aus dem Stand" in das oft empfindliche Gut eindringen. Ein weiterer Vorteil ist die einfache Programmierung dieser Verfahrensweise. Der Bediener muß nur die gewünschte Geschwindigkeit im Gut (Fleisch, Obst) angeben und die Dicke des Gutes. Letztere kann sogar mittels bekannter Vorrichtungen wie Fühler oder Lichtschranken automatisch erkannt werden, so daß nur ein einziger Parameter einzustellen ist.

Ebenso können in verschiedenen Teilbereichen des Nadelverfahrweges unterschiedliche Lineargeschwindigkeiten gefahren werden.

Ähnliches gilt für den mit dem o. g. Antrieb kommunizierenden und darauf synchronisierten Fördervorschubantrieb. Entgegen der normalen bekannten starren Ankopplung bietet der dynamische Servoantrieb durch die vielen möglichen Verfahrensprofile auch hier eine Vielzahl von nützlichen Lösungen.

Entsprechend des Nadelkopfes und des erwünschten Nadeleinstichbildes im Produkt kann durch eine sequentielle Verfahrung die Einstichzahl einfach verändert oder dem Produkt angepaßt werden, so wenn z.B. der Fördergurt in (z.B. Hähnchen aufnehmende) Kassetten unterteilt ist. Dann erfolgen Einstiche nur, wenn gerade Fleisch unter dem Nadelbalken NB liegt.

Auch längere Verfahrwege sind dann einfach zu erreichen, wenn bei z.B. schmalem Fördertunnel der Nadelbalken NB quer, das heißt längs der Förderrichtung, eingebaut ist.

Möglich ist ebenso, daß die Nadeln N - z.B. bei dickem Fleisch so in ihrer Geschwindigkeit gesteuert werden, daß sie eine relativ gleichmäßige Geschwindigkeit aufweisen. Bei einem normalen Exzenterantrieb, der mit einer konstanten Geschwindigkeit rotiert, folgt die Nadelgeschwindigkeit einer Sinusfunktion. D.h. im oberen Totpunkt (0°) und im unteren Totpunkt (180°) ist die Geschwindigkeit der Nadeln 0, in den Lagen +90° und - 90° ist die Geschwindigkeit der Nadeln maximal, dazwischen nimmt die Geschwindigkeit die von der Sinuskurve vorgegebenen Werte an. Mit der Erfindung kann die Geschwindigkeit des Motors Nadelbalken MN so geregelt werden, daß die Geschwindigkeit der Nadeln - außer in der Nähe der Totpunkte - praktisch immer gleich ist. Dies z.B. dadurch, daß der Motor MN im oberen Totpunkt relativ schnell fährt, während er in den 90°-Lagen nur eine mittlere Geschwindigkeit aufweist. Zum unteren Totpunkt hin beschleunigt der Motor wieder, so daß sich praktisch - ausgenommen sind die Totpunkte - eine gleichmäßige Nadelgeschwindigkeit ergibt. Dies geht ebenso im Reversierbetrieb. Die gleichmäßige Nadelgeschwindigkeit führt - auch bei konstantem Pumpendruck, also ohne ihn regeln zu müssen - zu gleichmäßig verteilten Einspritzmengen.

Ebenso möglich ist es, die Steuerung so zu programmieren, daß sich die Nadeln N bei dem Weg durch die obere Schale eines Fleischstückes relativ langsam bewegen und beim weiteren Vordringen durch die untere Schale relativ schnell. Dies ist z.B. sinnvoll bei Fleischteilen, deren Unterschale ein Material enthält, daß relativ wenig Pökelflüssigkeit aufnimmt, während die obere Hälfte die Flüssigkeit sehr gut aufnimmt. Dieses unterschiedliche Absorptionsverhalten der Fleischarten kann durch die unterschiedlichen Geschwindigkeiten der Nadeln N kompensiert werden.

Eine weitere Steuervariante ist die Öffnung und Schließung der Ventile V. Wurde die Öffnung und Schließung der Ventile beim Stand der Technik oft einfach an das Eindringen der Nadeln in das Fleisch gekoppelt (meist über die Relativstellung des Fleischniederhalters zu den Nadeln N, der hier selbstverständlich auch vorgesehen sein und zur Steuerung der Injizierung verwendet werden kann) so können erfindungsgemäß unterschiedliche Programme gewählt werden. So ist es möglich, nur beim Einstechen zu injizieren, oder beim Einstechen und beim Herausfahren, oder nur beim Herausfahren. Genau so ist es möglich, bei unterschiedlichen Fleischqualitäten (Oberschale und Unterschale) mit unterschiedlichen Drücken oder unterschiedliche Flüssigkeitsmengen zu injizieren. Beim Einfahren der Nadeln in die Oberschale können die Ventile geöffnet werden, beim Durchfahren der Unterschale geschlossen und z.B. beim Zurückdurchfahren der Oberschale wiederum geöffnet werden. Dies ist z.B. sinnvoll bei Fleisch mit Speckanteil, der ja kaum Pökelflüssigkeit aufnimmt.

Die unterschiedlichen Einspritzmengen können auch so eingestellt werden, daß z.B. Fischteile, die unterschiedliche Dicken haben, z.B. ein relativ dickes Teil in der Mitte des Fischrumpfes und ein relativ dünnes am Schwanzende, dann auch mit unterschiedlichen Pökelflüssigkeitsmengen beaufschlagt werden - wodurch jedoch auf jeweils eine Mengeneinheit bezogen eine überall gleiche Einspritzmenge ermöglicht ist. Die Dickenerkennung kann z.B. durch den Fleischniederhalter erfolgen, der in der Figur der Einfachheit halber nicht gezeigt ist. Dieser kann jedoch auch zur Steuerung der Ventile V eingesetzt werden, so daß keine Flüssigkeit injiziert wird, wenn die Hohl nadeln nicht innerhalb des Fleisches sind.

Die Steuerung ST regelt erfindungsgemäß auch den Vorschub (also den Motor MF). Der Vorschub kann in verschiedenen Geschwindigkeiten eingestellt werden, die wiederum dem Fleisch und der gewünschten Einspritzmenge angepaßt sind. So kann der Vorschub in gleichmäßigen Schritten erfolgen, z.B. stets 50 mm, oder in Doppelschritten, wobei der erste Schritt z.B. 80 mm, der zweite Schritt 10 mm ist, der dritte Schritt wieder 80 mm, der nächste wieder 10 mm. Dies ist alles frei einstellbar und kann dem Nadelbild des Nadelbalkens angepaßt werden. Möglich ist durch die erfindungsgemäße Kopplung von Förderbandmotor MF und Nadelbalkenmotor MN auch die Vorwärtsbewegung abwechselnd mit einer Rückwärtsbewegung nach jedem Takt, oder eine sequentielle Bewegung, wie oben beschrieben.

Mit der Erfindung sind also die unterschiedlichsten Kombinationen von Vorschubgeschwindigkeiten und Nadelgeschwindigkeiten möglich. Ebenso eine Leerlauffunktion, Stillstand bei diskontinuierlicher Beschickung der Anlage oder Niederhalter(Fleischabstreifer-) steuerung. Auch sind die Einspritzmengen und die Ventilöffnungszeiten beliebig einstellbar. Durch die erfindungsgemäße Erfassung der Lage der Nadeln N weiß die Steuerung ST stets, wo die Nadeln stehen und kann so die Ventilöffnungszeiten, die Einstechgeschwindigkeiten, die Ausziehgeschwindigkeiten und/oder den getakteten Vorschub beliebig voreingestellt regeln.

Die Erfassung der Stellung der Nadeln N kann z.B. durch einen Drehgeber (einen inkrementalen Drehweggeber) am Motor MN - wenn man einen Servomotor verwendet - erfolgen, oder durch ein Element an der Hauptwelle HW, oder redundant mittels Drehwegerfassung an beiden Elementen. Die Nullpunktstellung der Hauptwelle HW wird dann der Steuerung ST zur Kalibrierung mitgeteilt. Die Geschwindigkeit des Motors MN kann beliebig gesteuert werden, z.B. so, daß die Hauptwelle HW auf den ersten 5° der Bewegung vom oberen Totpunkt weg sich relativ schnell bewegt, dann die nächsten 5° relativ langsam läuft, dann die nächsten 5° wieder schnell läuft usw., wobei beliebige Programme einstellbar sind, die sich bei jedem Hub wiederholen.

Anwendungsgebiet der Erfindung ist das Injizieren von Flüssigkeiten in Lebensmittel, insbesonders die Pökelung von Fleisch, Geflügel und Fisch zum Verlängern der Haltbarkeit oder zum Erzielen eines gewünschten Geschmacks. Mit Pökelung ist jedoch nicht nur das Injizieren von Salzlaken gemeint, sondern allgemein das Injizieren beliebiger Flüssigkeiten in Lebensmittel, z.B. auch das Einspritzen von Zuckerlösungen in Früchte.

## Patentansprüche

1. Vorrichtung zum Injizieren einer Flüssigkeit in ein Lebensmittel, insbesondere zum Pökeln von Fleisch, Geflügel oder Fisch, die eine Gruppe von Hohlnadeln (N) aufweist, die in bestimmte Bereiche des Lebensmittels periodisch eingestochen werden, Flüssigkeit injizieren und wieder herausgezogen werden, einen Fördervorschub aufweist, der die Lebensmittel intermittierend relativ zu der Hohlnadeln (N) bewegt, und eine Steuerung für die Abgabe der Flüssigkeit und den Vorschub, wobei der Motor (MN), der die Gruppe der Hohlnadeln (N) bewegt, ein drehwegauswertbarer Servomotor ist, der eine Erfassung der aktuellen Stellung seines Rotors oder der Nadeln (N) erlaubt, wobei diese Information zur Steuerung der Nadelgeschwindigkeit verwendet werden kann, gekennzeichnet durch ein Programm, in dem der Antrieb der Nadeln (N) in seiner Bewegungsrichtung stoppt und umkehrt, so daß die Nadeln(N) nur einen Teil der zur Verfügung stehenden Arbeitshöhe bewegt werden.

2. Vorrichtung nach Anspruch 1, dadurch gekennzeichnet, daß die Information auch zur Steuerung des Vorschubs und/oder der Injizierung verwendet wird.

3. Vorrichtung nach Anspruch 1 oder Anspruch 2, gekennzeichnet durch getrennte Motoren (MN, MF) für die Bewegung der Nadeln (N) und für den Vorschub.

## Claims

1. Apparatus for injecting liquid into food, in particular for curing meat, poultry or fish, which has a group of hollow needles (N) which are inserted periodically into particular areas of the food, inject liquid and are withdrawn again, which has a feed stroke which moves the food intermittently relative to the hollow needles (N), and a control device for dispensing the liquid and for the feed motion, the motor (MN) which moves the group of hollow needles (N) being a servomotor whose rotational displacement can be evaluated and which allows detection of the current position of its rotor or of the needles (N), it being possible to use this information to control the speed of the needles, characterized by a program in which the drive for the needles (N) stops and reverses its direction of motion, with the result that the needles (N) are moved over only part of the available working height.

2. Apparatus according to Claim 1, characterized in that the information is also used to control the feed motion and/or the injection.

3. Apparatus according to Claim 1 or Claim 2, characterized by separate motors (MN, MF) for moving the needles (N) and for the feed motion.

## Revendications

1. Dispositif pour injecter un liquide dans un aliment, en particulier pour saler la viande, la volaille ou le poisson, qui présente un groupe d'aiguilles creuses (N), qui sont périodiquement enfoncées dans des zones déterminées de l'aliment, injectent du liquide et sont à nouveau retirées, qui présente un dispositif de transport qui déplace les aliments par intermittence approximativement en direction des aiguilles creuses (N) et une commande pour l'injection du liquide et l'avancement, dans lequel le moteur (MN) qui déplace le groupe des aiguilles creuses (N) est un servomoteur pouvant évaluer l'avancement, qui permet de détecter la position actuelle de son rotor ou des aiguilles (N), dans lequel cette information peut être utilisée pour commander la vitesse des aiguilles, caractérisé par un programme dans lequel l'entraînement des aiguilles (N) s'arrête dans sa direction de mouvement et s'inverse, de sorte que les aiguilles (N) ne sont déplacées que d'une partie de la hauteur de travail disponible.

2. Dispositif suivant la revendication 1, caractérisé en ce que l'information est aussi utilisée pour commander l'avancement et/ou l'injection.

3. Dispositif suivant la revendication 1 ou 2, caractérisé par des moteurs séparés (MN, MF) pour le déplacement des aiguilles (N) et pour l'avancement.
